(19) Europäisches Patentamt / European Patent Office / Office européen des brevets

(11) **EP 3 695 135 B1**

(12) **EUROPÄISCHE PATENTSCHRIFT**

(45) Veröffentlichungstag und Bekanntmachung des Hinweises auf die Patenterteilung:
**03.03.2021 Patentblatt 2021/09**

(21) Anmeldenummer: **19749217.6**

(22) Anmeldetag: **17.07.2019**

(51) Int Cl.:
***F16D 69/04*** *(2006.01)*

(86) Internationale Anmeldenummer:
**PCT/EP2019/069190**

(87) Internationale Veröffentlichungsnummer:
**WO 2020/025316 (06.02.2020 Gazette 2020/06)**

(54) **VERFAHREN ZUR HERSTELLUNG VON BREMSBELÄGEN, VERFAHREN ZUR VERKÜRZUNG DER TROCKNUNGSZEIT EINER AUF EINEN BELAGTRÄGER FÜR EINEN BREMSBELAG AUFGEBRACHTEN KLEBERSCHICHT**

METHOD FOR MANUFACTURING BRAKE LININGS, METHOD FOR SHORTENING THE DRYING TIME OF AN ADHESIVE LAYER APPLIED TO A LINING CARRIER FOR A BRAKE LINING

PROCEDE DE FABRICATION DE GARNITURES DE FREIN, PROCEDE DE REDUCTION DU TEMPS DE SECHAGE D'UNE COUCHE D'ADHESIF APPLIQUEE SUR UN SUPPORT DE GARNITURE POUR GARNITURE DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2018 DE 102018118441**

(43) Veröffentlichungstag der Anmeldung:
**19.08.2020 Patentblatt 2020/34**

(73) Patentinhaber: **TMD Friction Services GmbH**
**51381 Leverkusen (DE)**

(72) Erfinder:
• **MAUS, Dominik**
**53773 Hennef (Sieg) OT Uckerath (DE)**
• **GÜMPEL, Frank**
**57537 Wissen (DE)**
• **STEINHAUER, Markus**
**57539 Bitzen (DE)**
• **WAPPLER, Dieter**
**51519 Odenthal (DE)**
• **REESE, Michael**
**Kürten 51515 (DE)**

(74) Vertreter: **Müller, Eckhard**
**Mühlstrasse 9a**
**65597 Hünfelden-Dauborn (DE)**

(56) Entgegenhaltungen:
**DE-A1- 19 532 230    JP-A- 2005 140 256**
**JP-B2- 5 135 151**

**Beschreibung**

Die vorliegende Erfindung betrifft ein Verfahren zur Herstellung von Bremsbelägen, insbesondere von Scheibenbremsbelägen, welches u.a. durch einen speziellen Verklebungs-oder Trocknungsschritt gekennzeichnet ist.

Bei der Herstellung von Bremsbelägen, welche einen in der Regel metallischen Belagträger (hier auch als Belagträgerplatte bezeichnet) und den eigentlichen Reibbelag umfassen, wird nach dem Stand der Technik der Reibbelag häufig mit dem Belagträger verklebt. Bei anderen Verfahren wird der Reibbelag auf den Belagträger gesintert oder mechanisch an diesen angebunden. Für die genannte Verklebung werden sowohl wasserlösliche als auch auf organischen Lösungsmitteln basierende Kleber verwendet. In jedem Fall muss das Lösemittel entfernt werden, bevor der Kleber bestimmungsgemäß verwendet werden kann; d.h., bevor der eigentliche Reibbelag mit der kleberbeschichteten Oberfläche des Belagträgers verpresst werden kann.

Gemäß dem Stand der Technik wird ein Belagträger bei Raumtemperatur mit Kleber beschichtet. Bei den verwendeten Beschichtungsmethoden handelt es sich üblicherweise um Aufwalzen, Aufsprühen oder um Siebdruckverfahren. Anschließend wird die Kleberschicht mittels erwärmter Luft oder durch IR-Strahlung getrocknet bzw. das Lösemittel abgedampft, damit die so behandelte Belagträgeroberfläche mit dem Reibbelag verpresst werden kann ("Facts about Friction" von Geoffrey Nicholson, Retina Theme, Copyright 2018).

Der Begriff Trocknung umfasst dabei im Stand der Technik und für die Zwecke der vorliegenden Erfindung das Verdampfen von wässrigen oder organischen Lösemitteln aus dem Kleber und dessen Übergehen vom flüssigen in den festen Zustand. Dieser Übergang wird auch als Gelieren, Durchhärtung oder als Durchtrocknung bezeichnet.

Bei dem Beschichtungs- und Trocknungsvorgang sind verschiedene Regeln und Normen zu beachten, die sowohl den verwendeten Kleber als auch die technische Durchführung der einzelnen Verfahrensschritte betreffen.

Beispielhaft seien hier genannt:

DIN 55945: Lacke und Anstrichstoffe - Fachausdrücke und Definitionen für Beschichtungsstoffe und Beschichtungen sowie DIN EN 971-1, DIN EN ISO 4618-2 und DIN EN ISO 4618-3 (DIN = Deutsches Institut für Normung, BGG = Berufsgenossenschaftliche Grundsätze).

Für lösemittelhaltige Kleber wären auch die Explosionsschutz-Regeln (EX-RL) bzw. (BGR 104) und die lüftungstechnische Berechnung von Kammer- und Durchlauftrocknern, BGG 909, zu beachten (alle genannten Regeln und Normen in der zum Prioritätszeitpunkt dieser Anmeldung geltenden Fassung).

Der genannte Trocknungsprozess ist von einer Vielzahl von Parametern abhängig. Gewicht und Material der Belagträger sind aufgrund der dadurch bestimmten Wärmeleitfähigkeit von großer Bedeutung. Belagträger werden aus Metall gefertigt und weisen in Abhängigkeit vom Einsatzzweck, z.B. Belagträger für Zweiräder mit einem Gewicht von 50 Gramm bis zu Gussträgerplatten für LKW mit ca. 2,5 kg Gewicht, sehr große Gewichtsunterschiede auf. Entsprechend beeinflussen Größe und Gewicht das Trocknungsverhalten der aufgebrachten Kleberschicht. Weiterhin von Bedeutung sind z.B. der Festkörperanteil des Klebers, dessen Abdunstverhalten, welches zwischen verschiedenen Klebertypen deutlich variieren kann, und die erforderliche Schichtdicke des Klebers. Zudem erfordern manche der im Stand der Technik häufig eingesetzten Phenolharzkleber eine Vorkondensation des Phenolharzes, damit eine optimale Klebung bzw. Adhäsion der Substrate Belagträgerplatte und Reibbelag bzw. Reibmaterial erzielt werden kann. Dazu wird die Polykondensation des Phenolharzes teilweise bereits während der Klebertrocknung vorgenommen und anschließend durch rasche Abkühlung des aufgetragenen Klebers wieder gestoppt.

In der betrieblichen Realität eines Bremsbelagherstellers werden die Belagträger einem Industrielager entnommen, wodurch die Lagertemperatur und dadurch die Objekttemperatur der Belagträger jahreszeitlich z.B. zwischen 15 und 35°C schwanken kann. Während der konventionellen Trocknung des Klebers auf der Belagträgeroberfläche mit erwärmter Luft oder IR-Strahlung bildet sich häufig auf der Kleberoberfläche eine Haut aus bereits getrocknetem Kleber (Trocknung schreitet von außen nach innen voran). Dadurch wird ein weiteres, kontrolliertes und gleichmäßiges Abdunsten der flüchtigen Kleberbestandteile aus den darunterliegenden Schichten behindert.

Schließlich ist zu beachten, dass zwischen Reibbelag und Belagträgeroberfläche z.B. aus Gründen der Geräuschdämmung eine Zwischenschicht aus einem dritten Material vorhanden sein kann. Je nach Materialpaarung kann eine Trocknung der jeweiligen Kleberschicht bzw. der Kleberschichten (Belagträger/Zwischenschicht und Zwischenschicht/Reibbelag) bei unterschiedlichen Temperaturen angezeigt sein. Die erforderlichen Temperaturdifferenzen liegen oft in einem sehr engen Bereich von ca. +/ - 3°C bezogen auf die Objekttemperatur des Belagträgers. Die Einhaltung dieser Temperaturdifferenzen stößt bei der beschriebenen konventionellen Trocknung schnell an ihre Grenzen und resultiert zumindest in einem sehr zeitraubenden Vorgang.

Alle vorangehenden Ausführungen gelten gleichermaßen sowohl für wasser- als auch für lösemittelbasierte Kleber.

Im Stand der Technik werden u. a. folgende Verfahren zur Herstellung von Bremsbelägen vorgeschlagen.

JP 2005 140256 A betrifft die Herstellung von Bremsbelägen, wobei der Belagträger mit einem Kleber beschichtet und nach der Beschichtung durch Hochfrequenzerwärmung aufgeheizt und so der aufgetragene Kleber gestrocknet wird.

JP 5 135 151 B2 bezieht sich auf die Herstellung von Scheibenbremsbelägen, wobei die Reibbeläge ebenfalls mit der Belagträgerplatte verklebt werden. Der auf die Trägerplatte aufgebrachte Kleber wird dadurch getrocknet, dass die Belagträgerplatte mit dem Kleber durch elektromagnetische Induktion oder durch konventionelles Erwärmen auf die gewünschte Temperatur gebracht wird.

DE 195 32 230 A1 beschreibt ein Verfahren zum Ankleben eines Reibbelages an einen Bremsbelagträger. Dazu wird die Belagträgerplatte in ein Kleberbad getaucht und anschließend wird der aufgebrachte Kleber in einem Ofen getrocknet.

Bei Bremsbelägen handelt es sich um Sicherheitsbauteile im Fahrzeugbau, deren Fertigung und technische Auslegung einer besonderen Sorgfalt bedürfen. Die Kleberbeschichtung als Bindeglied zwischen Reibmasse, Belagträger und evtl. vorhandener Zwischenschicht ist dabei von besonderer Bedeutung. Gleichzeitig sollen Bremsbeläge allerdings in einem kosteneffizienten Verfahren herstellbar sein, bei dem z.B. keine Einbußen aufgrund langer Produktwechselzeiten hingenommen werden müssen.

Aufgabe der vorliegenden Erfindung war es daher, ein Verfahren zur Verbindung von Belagträger, Reibbelag und evtl. vorhandener Zwischenschicht (Verfahren zur Herstellung eines Bremsbelags) bereit zu stellen, bei dem die beschriebenen und aus dem Stand der Technik bekannten Nachteile entweder nicht oder zumindest in deutlich reduziertem Umfang auftreten.

Die erfindungsgemäße Aufgabe wird durch ein Verfahren zur Herstellung von Bremsbelägen oder durch ein Verfahren zum Verkleben von Reibbelägen mit einem Belagträger/ Belagträgerplatte, mit oder ohne einer zwischen Reibbelag und Belagträger befindlichen Zwischenschicht aus einem geeigneten Material, gelöst, das insbesondere durch die induktive Erwärmung des Belagträgers gekennzeichnet ist.

Der erfindungsgemäße Prozess kann prinzipiell in 3 - 4 Phasen oder Zonen gegliedert werden, die nicht zwingend in der Reihenfolge a) - d) ablaufen müssen:

a) induktive Erwärmung des Belagträgers,
b) daran anschließend eine Temperaturausgleichszone, dies ist optional.
c) Beschichtung des Belagträgers mit einem Kleber (wasser- oder lösemittelbasiert) und
d) eine sich daran anschließende Abdunstzone.

Die induktive Erwärmung des Belagträgers erfolgt erfindungsgemäß vor der Beschichtung der Trägerplatte mit dem Kleber.

Beiden Abläufen gemeinsam ist, dass die Beschichtung vom Belagträger ausgehend erwärmt wird.

Dadurch kann sich auf der Oberfläche des Klebers keine Haut bilden, die den Abdunstvorgang behindern und die Bildung oder den Verbleib von Restfeuchte in einer scheinbar trockenen Beschichtung und eine Blasenbildung in der Kleberschicht begünstigen könnte.

Erfindungsgemäß, wie im obigen Schema a) - d) dargestellt, ist die vorherige induktive Erwärmung der Trägerplatte vor Auftrag des Klebers.

Das erfindungsgemäße Verfahren ist gleichermaßen für wasserbasierte als auch für lösungsmittelbasierte Kleber geeignet, wobei wasserbasierte Kleber bevorzugt sind, da diese keine zusätzlichen Ex-Schutz-Maßnahmen erfordern.

Bei der Erwärmung von Metallen mittels Induktion wird in dem zu erhitzenden Werkstück ein Wirbelstrom erzeugt. Die Energieübertragung zum Metall/Belagträger erfolgt mittels eines Induktors bzw. einer Spule. Diese Induktoren und Spulen gibt es in nahezu beliebigen Ausführungen, sie werden meist an die jeweiligen Werkstücke angepasst und gefertigt. Da bei der Erwärmung durch Induktion die Energie direkt in das Werkstück induziert wird, entsteht die Wärme ausschließlich im Werkstück und muss nicht, wie bei anderen Methoden, durch Wärmeleitung, -strahlung oder Konvektion übertragen werden.

Die physikalischen Grundlagen einer induktiven Erwärmung sind hinlänglich bekannt und werden hier nur kurz zusammengefasst:

1. Wird ein elektrischer Leiter von Wechselstrom durchflossen, dann bildet sich um ihn herum ein magnetisches Wechselfeld der gleichen Frequenz aus.

2. Bringt man in dieses Magnetfeld einen zweiten elektrischen Leiter ein, z.B. einen Belagträger aus Metall, so wird darin eine Spannung gleicher Frequenz induziert. Diese Spannung erzeugt im zweiten Leiter einen Strom, der um 180° phasenverschoben zum Strom im ersten Leiter steht.

3. Der ohmsche Widerstand R im zweiten Leiter, hier beispielhaft einem Belagträger, führt dem Joule'schen Gesetz entsprechend dazu, dass in diesem mit einem Strom S über eine Zeit t eine Wärmemenge Q entsteht:

$$Q = S^2 \times R \times t$$

Damit sich die induzierte Energie so weit wie möglich auf den zweiten Leiter konzentriert, wird der erste Leiter in der Regel aus hochwertigem Kupfer mit möglichst geringem ohmschen Widerstand R gefertigt. In der praktischen Anwendung wird dieser erste Leiter üblicherweise als Induktor bezeichnet. Die Erwärmung der Belagträger kann z.B. in einem Induktionsofen (induktivem Trockner) erfolgen, der wiederum einen Teil der Gesamtprozessstrecke zur Herstellung eines Bremsbelags darstellen kann. Nach dem Stand der Technik sind dies meist Anlagen oder Vorrichtungen mit einer auf einer Seite montierten offenen Spule oder mit einem Induktor, durch deren magnetisches Wechselfeld die zu erwärmenden Objekte - hier: Belagträgerplatten - durchgeführt werden.

Das wesentliche Merkmal eines induktiven Trocknungsprozess besteht darin, dass das Substrat (hier: Belagträger aus Metall) wie beschrieben im Sinne des Joulschen Gesetzes von innen erwärmt wird. Im Vergleich zu einer konventionellen Trocknung, z.B. mit Hilfe von erwärmter Luft, gibt es keine Gefahr einer Hautbildung auf dem Kleber oder Lack, welche die Abdunstung/Trocknung behindern könnte. Entsprechend, das haben Versuche gezeigt, kann die erforderliche Trocknungszeit wegen der direkten Erwärmung des Substrats in erheblichem Umfang verkürzt werden.

Beispiele:

bei Lösemittelklebern - z.B. von derzeit 18,5 min. auf 3,5 min.
bei wasserbasierten Klebern - z.B. von derzeit 18,5 min. auf 2,5 min.

Dabei ist es unerheblich, ob die induktive Erwärmung des Substrats (Belagträger) vor oder nach der Beschichtung erfolgt. Erfindungsgemäß wird der Belagträger vor der Beschichtung mit dem Kleber auf die vom Hersteller des Klebers empfohlene Trocknungstemperatur erwärmt.

Allgemein gilt, dass die Prozesszeiten für den Trocknungsschritt gegenüber konventionellen Verfahren des Standes der Technik um mindestens 50% verkürzt werden können.

Der Kleber kann mit üblichen Beschichtungsmethoden, wie z.B. Aufsprühen, Aufwalzen oder im Siebdruck, auf den Belagträger aufgebracht werden. Bevorzugt wird das Aufsprühen verwendet. Dabei wird mit Hilfe von Robotern und der bestimmungsgemäßen Abstimmung zwischen Sprühtechnik und ausgewähltem Kleber der Overspray des Klebers so minimiert, dass auf eine Rückgewinnung verzichtet werden kann. Hieraus resultiert eine umweltfreundliche Reduzierung der benötigten Klebermenge.

Die Steuerung bzw. Überwachung der Temperatur des induktiv erwärmten Belagträgers erfolgt vorteilhafterweise mit Hilfe von Wärmebildkameras.

Die erfindungsgemäße Trocknung der Kleberbeschichtung mit einer induktiv vorgewärmten Belagträgerplatte bietet gegenüber den bekannten Verfahren des Standes der Technik eine Vielzahl von Vorteilen.

Die Temperatur (Ausgangstemperatur) der Belagträgerplatte im Anlieferungszustand hat keinen Einfluss auf die Produktqualität. Unabhängig von jahreszeitlichen Einflüssen wird die Belagträgerplatte stets auf die für die optimale Trocknung erforderliche (identische) Objekttemperatur in Abhängigkeit vom verwendeten Kleber vorgewärmt. Im Fall eines wasserbasierten Klebers ist dies in der Regel ein Temperaturbereich von 60 bis 65°C.

Auch Einflüsse unterschiedlicher, für die Trägerplatte verwendeter Materialien, wie z.B. Stahl oder Grauguss, sowie Einflüsse unterschiedlich großer und schwerer Belagträgerplatten auf die Erwärmung werden beim erfindungsgemäßen Verfahren eliminiert. D.h., es liegt immer die vom Hersteller empfohlene optimale Trocknungstemperatur vor, die während der ebenfalls empfohlenen Trocknungsdauer ohne weiteres konstant gehalten werden kann. Der Begriff Trocknung umfasst dabei das Verdampfen von wässrigen oder organischen Lösemitteln aus dem Kleber, sowie dessen Übergang vom flüssigen in den festen Zustand. Dieser Übergang wird auch als Gelieren, Durchhärtung oder Durchtrocknung bezeichnet.

Der aufgebrachte Kleber (Emulsion, Dispersion, Lösung) trocknet auf dem Belagträger von unten (ausgehend von der Belagträgeroberfläche) nach oben durch. Die Reproduzierbarkeit des Trocknungsergebnisses wird dadurch deutlich verbessert. Die bei konventioneller Trocknung mit erwärmter Luft oder IR-Strahlung häufig zu beobachtende und nachteilige Haut- oder Blasenbildung des Klebers wird zuverlässig unterbunden.

Da sich der Induktor (z.B. Spule, Flachspule oder einzelne Windung eines elektrischen Leiters) selbst nahezu nicht erwärmt, sondern nur die mit einer Fördereinrichtung darüber geführten Belagträgerplatten, ist eine Anpassung der Trocknungstemperaturen in sehr kurzer Zeit (z.B. im Minutentakt) möglich. Weiterhin ist auch die Temperaturkonstanz beim erfindungsgemäßen Verfahren gegenüber konventionellen Trocknungsverfahren des Standes der Technik (z.B. konventioneller Umlufttrockner) deutlich verbessert. Dies gilt auch für Belagträgerplatten von PKW und deren große Vielfalt an Form, Material und Trocknungstemperaturen. Damit können die heute noch üblichen Ausfallzeiten für das Aufheizen oder die Abkühlung eines konventionellen Umluft-Trockners entfallen.

Weiterhin liegt der Energiebedarf bei der Erwärmung von Belagträgern mittels Induktion um ca. 50-70% unter den heute üblichen Werten für z.B. Umluftöfen. Zudem ist eine hohe Prozesssicherheit gewährleistet; wird der Produktionsfluss der Belagträgerplatten unterbrochen, schaltet sich der Induktor einfach aus.

Überdies sind Induktoren auch für den Einsatz in Ex-Bereichen gut geeignet. Von großem Vorteil ist dabei der vergleichsweise kleine Dampfraum eines induktiven Trockners. Dadurch kann die erforderliche Anzahl von notwendigen Luftwechseln mit deutlich kleineren Abluftvolumina gewährleistet werden. Insofern bietet das erfindungsgemäße Verfahren der induktiven Trocknung beim Einsatz von lösemittelbasierten Klebern zusätzliche Vorteile.

Der Kleberauftrag erfolgt erfindungsgemäß bevorzugt durch Sprühen (Sprühkleber) unter Einsatz von Robotertechnik. Die Beschichtung erfolgt abgestimmt auf die zu beschichtende Fläche der jeweiligen Belagträgerplatte. Dadurch wird eine starke Minimierung des Oversprays sichergestellt, sodass auf eine (Kleber-)Rückgewinnung sowohl unter Umwelt- als auch unter wirtschaftlichen Gesichtspunkten verzichtet werden kann.

**Patentansprüche**

1. Verfahren zur Herstellung eines Bremsbelages, wobei ein Belagträger auf einer einem Reibbelag zugewandten Seite mit einem wasser- oder lösemittelbasiertem Kleber beschichtet und die Kleberschicht durch induktive Erwärmung des Belagträgers auf eine gewünschte Temperatur getrocknet wird, **dadurch gekennzeichnet, dass** die induktive Erwärmung des Belagträgers vor dem Kleberauftrag erfolgt.

2. Verfahren nach Anspruch 1, **dadurch gekennzeichnet, dass** der Kleberauftrag durch Aufwalzen, Aufsprühen oder durch Siebdruck erfolgt.

3. Verfahren nach Anspruch 1 oder 2, **dadurch gekennzeichnet, dass** die gewünschte Trocknungstemperatur des Belagträgers mit einer Wärmebildkamera überwacht wird.

4. Verfahren nach einem der Ansprüche 1 bis 3, **dadurch gekennzeichnet, dass** sich an eine Heizstrecke für die induktive Erwärmung des Belagträgers eine Temperaturausgleichszone und an eine Beschichtungszone eine Abdunstzone anschließt.

5. Verfahren zur Verkürzung der Trocknungszeit einer auf einen Belagträger für einen Bremsbelag aufgebrachten und zu trocknenden Kleberschicht, **dadurch gekennzeichnet, dass** eine induktive Erwärmung des Belagträgers auf eine erforderliche Trocknungstemperatur vor dem Kleberauftrag erfolgt.

6. Verwendung von induktiv erwärmten Belagträgerplatten zur Herstellung von Bremsbelägen, die Verwendung **gekennzeichnet durch** ein Verfahren nach einem der Ansprüche 1 bis 4.

**Claims**

1. Method for producing a brake lining, a lining carrier being coated with a water-based or solvent-based adhesive on a side which faces a friction lining, and the adhesive layer being dried by way of inductive heating of the lining carrier to a desired temperature, **characterized in that** the inductive heating of the lining carrier takes place before the adhesive application.

2. Method according to Claim 1, **characterized in that** the adhesive application takes place by way of being rolled on, being sprayed on or by way of screen printing.

3. Method according to Claim 1 or 2, **characterized in that** the desired drying temperature of the lining carrier is monitored by way of a thermal imaging camera.

4. Method according to one of Claims 1 to 3, **characterized in that** a heating section for the inductive heating of the lining carrier is adjoined by a temperature equalization zone, and a coating zone is adjoined by an evaporation zone.

5. Method for shortening the drying time of an adhesive layer which is applied to a lining carrier for a brake lining and is to be dried, **characterized in that** inductive heating of the lining carrier to a required drying temperature takes place before the adhesive application.

6. Use of inductively heated lining carrier plates for producing brake linings, the use being **characterized by** a method according to one of Claims 1 to 4.

**Revendications**

1. Procédé de fabrication d'une garniture de frein, un support de garniture étant revêtu, sur un côté tourné vers une garniture de frein, d'un adhésif à base d'eau ou de solvant et la couche d'adhésif étant séchée par chauffage par induction du support de garniture à une température souhaitée, **caractérisé en ce que** le chauffage par induction du support de garniture s'effectue avant l'application de l'adhésif.

2. Procédé selon la revendication 1, **caractérisé en ce que** l'application d'adhésif s'effectue par application au rouleau, pulvérisation ou sérigraphie.

3. Procédé selon la revendication 1 ou 2, **caractérisé en ce que** la température de séchage souhaitée du support de garniture est contrôlée avec une caméra d'imagerie thermique.

4. Procédé selon l'une quelconque des revendications 1 à 3, **caractérisé en ce qu'**une section de chauffage pour le chauffage par induction du support de garniture est suivie d'une zone d'équilibrage de la température et une zone de revêtement est suivie d'une zone d'évaporation.

5. Procédé pour raccourcir le temps de séchage d'une couche d'adhésif à sécher, appliquée sur un support de garniture pour une garniture de frein, **caractérisé en ce qu'**un chauffage par induction du support de garniture s'effectue, à une température de séchage nécessaire, avant l'application de l'adhésif.

6. Utilisation de plaques de support de garniture chauffées par induction pour fabriquer des garnitures de frein, cette utilisation étant **caractérisée par** un procédé selon l'une quelconque des revendications 1 à 4.

**IN DER BESCHREIBUNG AUFGEFÜHRTE DOKUMENTE**

**In der Beschreibung aufgeführte Patentdokumente**

- JP 2005140256 A
- JP 5135151 B
- DE 19532230 A1

**In der Beschreibung aufgeführte Nicht-Patentliteratur**

- **GEOFFREY NICHOLSON.** Facts about Friction. Retina Theme, Copyright, 2018